# EUROPEAN PATENT APPLICATION

(11) **EP 3 407 024 A1**
(43) Date of publication of application: **28.11.2018**
(21) Application number: 18173722.2
(22) Date of filing: 23.05.2018
(51) Int. Cl.: G01D 5/14

(54) **HALBACH ARRAY FOR ROTOR POSITION SENSING**

(30) Priority: 23.05.2017 US 201715602927
(71) Applicant: Simmonds Precision Products, Inc., Vergennes, VT 05491 (US)
(72) Inventor: TANGUDU, Jagadeesh Kumar, South Windsor, CT 06074 (US); LEINGANG, Alan F., Orange, CA 92867 (US)
(74) Representative: Dehns

(57) **Abstract**

Embodiments herein relate to a position sensor (100) and method for measuring the rotation of a rotary shaft (10). The position sensor includes a rotary shaft having a cavity (12) at an axial end thereof, a permanent magnet array (130, 132) arranged as a Halbach array and disposed at a circumference of the cavity, and a first Hall Effect sensor (140) configured to detect a magnetic field produced by the permanent magnet array in a first radial axis.

## Description

### TECHNICAL FIELD

The invention relates to rotating machines including dynamoelectric machines, and more particularly to a sensor and method for accurately sensing a position of a rotor in an electric motor using a magnetic sense element and Hall Effect sensors.

### BACKGROUND

Measuring rotary position is an important element in a wide variety of applications. In dynamoelectric machines for instance, a rotor position sensor gives information about the position of the rotor magnets with respect to stator windings. The position of the rotor magnets is important for properly energizing stator windings. Electric machines, and in particular electric motors, that require controlled armature current waveforms (in order to rotate smoothly, for example) also require accurate rotor position sensing. Some motors use sensor less technologies, but often these technologies do not provide accurate rotor position sensing at very low speeds and are not smooth upon startup of the motor. Currently, state of the art electric machines use either an encoder or a resolver together with associated electronic circuitry to determine rotor positions. Depending on the resolution required, however, these solutions can become prohibitively expensive within applications that require low cost motors.

One class of high resolution encoders is referred to as "sine/cosine encoders". Sine/cosine encoders generate sine and cosine signals rather than pulse waveforms. When used with additional electronics, processor capability and software, sine/cosine encoders indicate rotor position with fine resolution.

Magnets and digital Hall Effect sensors are often used as a rotor position sensing mechanism within brushless direct current (DC) motor applications where square-wave or six-step drive control is used. This method of sensing provides relatively low resolution, typically six position steps per electrical cycle when using three sensors. However, the magnets and Hall effect sensors used in the position sensor are subject to the environment and may be impacted by electromagnetic fields operating within the rotating machine

Accordingly, a low-cost device that senses rotor position without electromagnetic interference would be advantageous in numerous applications.

### BRIEF DESCRIPTION

According to one embodiment of the invention, described herein is a position sensor and method for measuring the rotation of a rotary shaft. The positon sensor includes a rotary shaft having a cavity at an axial end thereof, a permanent magnet array where the permanent magnet array disposed at a periphery of the cavity, and a first Hall Effect sensor configured to detect a magnetic field produced by the permanent magnet array in a first radial axis.

In addition to one or more of the features described above, or as an alternative, further embodiments may include a second Hall Effect sensor configured to detect a magnetic field and/or voltage produced by the permanent magnet array in a second radial axis.

In addition to one or more of the features described above, or as an alternative, further embodiments may include that the second radial axis is orthogonal to the first radial axis.

In addition to one or more of the features described above, or as an alternative, further embodiments may include that the permanent magnet array is arranged as at least one of a Halbach cylinder and a polygon.

In addition to one or more of the features described above, or as an alternative, further embodiments may include that a magnetic field produced by the permanent magnet array is substantially uniform in a center of the Halbach array.

In addition to one or more of the features described above, or as an alternative, further embodiments may include that a magnetic field produced by the permanent magnet array radially outward of the Halbach array is substantially cancelled.

In addition to one or more of the features described above, or as an alternative, further embodiments may include that the permanent magnet array comprises at least four permanent magnets.

In addition to one or more of the features described above, or as an alternative, further embodiments may include that the permanent magnet array comprises permanent magnets of at least one of square axial cross section, rectangular axial cross section, and a partial circumferential annular axial cross section.

In addition to one or more of the features described above, or as an alternative, further embodiments may include that the rotary shaft is a portion of an electric machine.

In addition to one or more of the features described above, or as an alternative, further embodiments may include that the cavity is cylindrical, and the permanent magnet array is disposed at an outer circumference of the cavity.

Also described herein an embodiment is an electric machine including a housing including a stator having a stator coil, a rotor assembly disposed in the housing on a rotary shaft and operable to rotate within the housing, the rotor configured to operably couple magnetic with the stator, the rotary shaft having a cavity in an axial end thereof, and a position sensing assembly. The position sensing assembly includes a permanent magnet array arranged as a Halbach array, the permanent magnet array disposed at a periphery of the cavity, and a first Hall Effect sensor configured to detect a magnetic field produced by the permanent magnet array in a first radial axis.

In addition to one or more of the features described above, or as an alternative, further embodiments may include that the positon sensing assembly further including a second Hall Effect sensor configured to detect a magnetic field produced by the permanent magnet array in a second radial axis.

In addition to one or more of the features described above, or as an alternative, further embodiments may include that the second radial axis is orthogonal to the first radial axis.

In addition to one or more of the features described above, or as an alternative, further embodiments may include that the permanent magnet array is arranged as at least one of a Halbach cylinder and a polygon.

In addition to one or more of the features described above, or as an alternative, further embodiments may include that a magnetic field produced by the permanent magnet array is substantially uniform in a center of the Halbach cylinder.

In addition to one or more of the features described above, or as an alternative, further embodiments may include that a magnetic field produced by the permanent magnet array radially outward of the Halbach array is substantially cancelled.

In addition to one or more of the features described above, or as an alternative, further embodiments may include that the permanent magnet array comprises eight permanent magnets.

In addition to one or more of the features described above, or as an alternative, further embodiments may include that the permanent magnet array comprises permanent magnets of at least one of square axial cross section, rectangular axial cross section, and a partial circumferential annular axial cross section.

Also described herein in an embodiment is a method for measuring the rotation of a rotary shaft. The method includes employing a rotary shaft having a cavity in an axial end thereof, disposing a permanent magnet array arranged as a Halbach array at a periphery of the cavity, operably disposing a first Hall Effect sensor configured to detect a magnetic field produced by the permanent magnet array in a first radial axis, measuring the magnetic field from the permanent magnet array, and computing a rotational position of the rotary shaft based on the measurement.

In addition to one or more of the features described above, or as an alternative, further embodiments may include operably disposing a second Hall Effect sensor configured to detect a magnetic field and/or voltage produced by the permanent magnet array in a second radial axis, wherein the second radial axis is orthogonal to the first radial axis and the computing is independent of at least one of a rotational position and rotational speed of the rotor shaft.

Additional features and advantages are realized through the techniques of the present disclosure. Other embodiments and aspects of the disclosure are described in detail herein. For a better understanding of the disclosure with the advantages and the features, refer to the description and to the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a partial cross sectional view of a permanent magnet (PM) electric machine according to one embodiment;
FIG 2A is a partial side view of a end of rotor shaft with a cavity and PM in accordance with an embodiment;
FIG 2B is a cross-sectional view of a rotor shaft with a cavity and PM array in accordance with an embodiment;
FIG. 3 is a depiction of a Hall effect sensor assembly in accordance with an embodiment;
FIG. 4A is a depiction of a waveform of the detected magnetic fields in accordance with an embodiment;
FIG. 4B is a depiction of a computed shaft position based on the measured magnetic fields in accordance with an embodiment; and
FIG. 5 is a flowchart of the method of a shaft position of an electric machine in accordance with an embodiment.

### DETAILED DESCRIPTION

For the purposes of promoting an understanding of the principles of the present disclosure, reference will now be made to the embodiments illustrated in the drawings, and specific language will be used to describe the same. It will nevertheless be understood that no limitation of the scope of this disclosure is thereby intended. The following description is merely illustrative in nature and is not intended to limit the present disclosure, its application or uses. It should be understood that throughout the drawings, corresponding reference numerals indicate like or corresponding parts and features. As used herein, the term controller refers to processing circuitry that may include an application specific integrated circuit (ASIC), an electronic circuit, an electronic processor (shared, dedicated, or group) and memory that executes one or more software or firmware programs, a combinational logic circuit, and/or other suitable interfaces and components that provide the described functionality.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" are understood to include any integer number greater than or equal to one, i.e. one, two, three, four, etc. The terms "a plurality" are understood to include any integer number greater than or equal to two, i.e. two, three, four, five, etc. The term "connection" can include an indirect "connection" and a direct "connection".

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in Figure X may be labeled "Xa" and a similar feature in Figure Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

In general, rotor position measurement and estimation techniques typically involve placing permanent magnets on either the end or circumferential face of the rotating shaft and capturing the magnetic field using a Hall Effect sensor place near these permanent magnets. This method relies on magnetic flux distributed around the magnets and the Hall Effect sensors. However, in most systems this means that the Hall Effect sensors can be impacted by other disturbances. In electric machine applications, electromagnetic interference from the permanent magnets or coil currents can impact the measured magnetic fields and, thereby, the operation of the sensors.

Embodiments herein relate generally to a rotor position sensor employing permanent magnets (PMs) arranged in a Halbach array to provide a uniform magnetic field. One or more of these embodiments may address one or more of the above noted concerns. The rotor position sensor may be applied to any application for measuring shaft rotation but is particularly useful for applications in an electric machine where electromagnetic interference (EMI) may be cause difficulty measuring lower level signals from the Hall effect sensors.

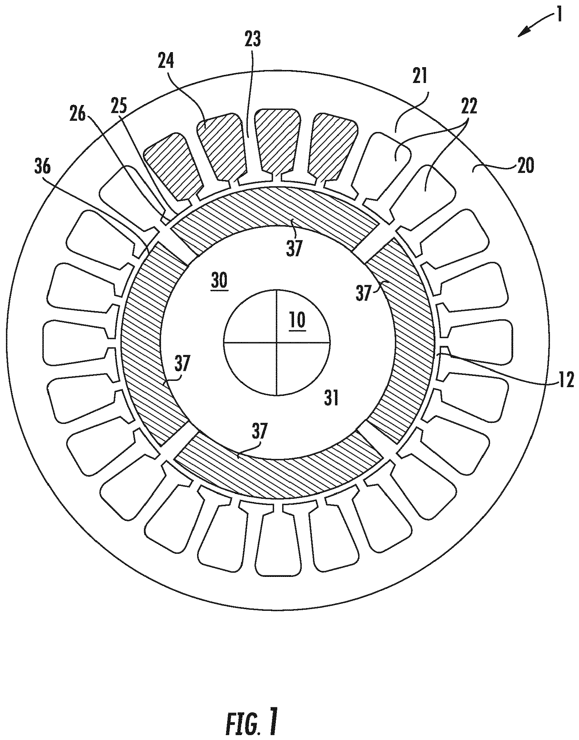

FIG. 1 is a partial axial cross sectional view of a permanent magnet (PM) dynamoelectric machine 1 according to one possible embodiment. The PM machine 1 includes a stator assembly 20 with a stator core 21 and with stator slots 22 and a three-phase (or polyphase) armature winding (power winding) 24 wound in the stator slots 22. The PM machine 100 also includes a rotor assembly 30 disposed on a central shaft 10 coupled to bearings. The PM machine 100 includes one or more PMs 37 embedded in the rotor core 31. The PMs 37 produce the excitation flux.

A multiple pole outer stator assembly shown generally as 20, typically of the multiphase alternating current (AC) type, circumscribes the rotor assembly 30. The stator assembly 20 has multiple ferromagnetic stator teeth 23 coupled to a ferromagnetic stator core 21, and arranged around the periphery of the stator core 21, one stator tooth 23 for each of the slots of the stator assembly 20. A distal end 25 of each stator tooth 23 forms an inner periphery 26 of the stator assembly 20 and is proximate the outer annular periphery 36 of the rotor assembly 30. In one embodiment, a small outer air gap 12 exists between the outer annular periphery 36 of the rotor assembly 30 and the stator teeth 21 of the stator assembly 20. The stator assembly 20 also has multiple stator coils 24 mounted in the slots 22 between the stator teeth 23. In an embodiment, the ferromagnetic stator core 21 and stator teeth 23 may be constructed of a variety of ferromagnetic materials including, but not limited to steel laminations, sintered magnetic powder material, and solid ferromagnetic material such a steel. In one embodiment steel laminations are employed. The stator winding 24, also called an armature winding, is typically a three-phase winding. However, it should be understood that any number of phases can be designed. The minimum number of phases is one.

The PM rotor assembly 30 comprises multiple PMs 37 arranged and mounted thereon. By way of example only, FIG. 1 shows the PM rotor assembly 30 with four PMs 37. The PMs 37 are embedded in the rotor core 31 and are magnetized in the radial direction. That is, in an embodiment, the PMs 37 are trapezoidal or rectangular in shape, having two longer sides perpendicular to the direction of magnetization. Radial arrangement of the PMs 37, e.g. spoke magnets magnetized in circumferential direction is also possible. In addition, the polarity of the PMs, 37 i.e., magnetization vector, is radial (e.g. in the radial direction) The polarity of PMs 37 is shown in FIG. 1. There is a ferromagnetic material (rotor core 31) between the PMs 37 and the outer periphery 36 of the rotor assembly 30. Magnetic poles are created in the ferromagnetic material radially outward of the PMs 37. As depicted, the rotor assembly 30 depicted has four poles created by the embedded PMs 37. The PMs 37 can be also arranged at greater angle than zero degrees with respect the rotor radius or can have different cross section than rectangular. The number of PMs 37 is typically even to create pole pairs. The minimum number of PMs 37 is two and the maximum number depends on the room available and the size of the PMs 37 employed. For those skilled in electrical machines it is obvious that any even number of poles can be used. Also, the PMs 37 can be arranged radially (spoke magnets), embedded in V-shaped axial slots as described herein, or other shapes and magnetizations of the PMs 37 may be used. A small air gap 12 exists between the outer annular periphery 36 of the rotor assembly 30 and the inner periphery 26 of the stator assembly 20.

It will be appreciated that while the embodiments herein are described with respect to a PM brushless DC machine, such description is for example only and not intended to be limiting in any way on the described embodiments and the claims.

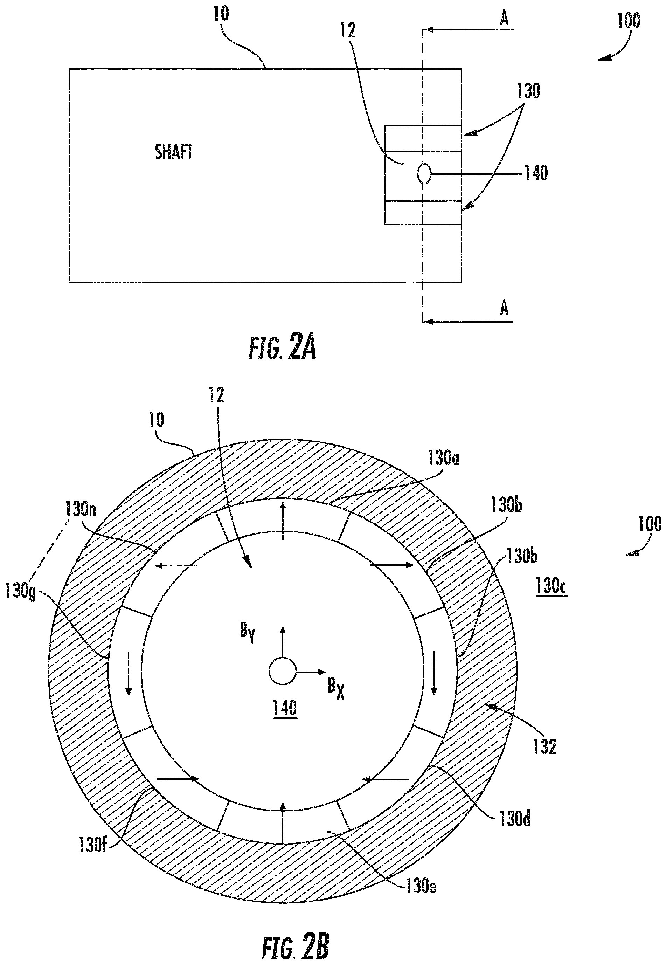

FIG 2A depicts an application of a rotor position sensor shown generally as 100 that may be employed in the rotor shaft 10 of an electric machine in accordance with an embodiment. The rotor position sensor 100 includes one or more permanent magnets (PM) 130 (for position sensing as opposed to the PM 37 above for motor operation and a Hall Effect sensor 140. In an embodiment the architecture for the position sensor 100 includes arranging the permanent magnet 130 about the outer periphery of a cavity 12 in the rotor shaft 10, such that it focuses the field uniformly at the location where the sensor is placed. A uniform magnetic field is more readily detected by the Hall Effect sensor 140. In an embodiment, to facilitate detection and achieve providing a substantially uniform magnetic field, several permanent magnet sections 130a-n are arranged in an annular ring or polygon inside a cavity 12 in the rotor shaft 10 as shown in FIG 2B.

FIG. 2B is an expanded end view of the rotor shaft10. In an embodiment, the permanent magnets 130 (eight in this instance shown, though at least four is sufficient) are arranged in a cylindrical Halbach array 132. The cylindrical Halbach array 132 is an arrangement where the orientation of permanent magnetic segments 130 which causes the net magnetic fields to be cumulative and substantially uniform inside the annular ring of the array 132 while the magnetic field(s) outside the annular ring of the array 132 are opposing and thus, significantly reduced. That is, the array 132 provides a substantially uniform magnetic field in the center of the array 132 and substantially no magnetic field outside the array 132. Moreover, with placement of the permanent magnets 130a-n (in the form a Halbach Array 132) inside the shaft 10, as the shaft 10 rotates, the uniform magnetic field formed by the Halbach array 132 rotates with the rotation of the shaft 10 and creates a magnetic signature representing rotor displacement and speed. In an embodiment, by placing a Hall Effect sensor 140 in a position to detect the rotation of the magnetic field the position of the rotating shaft can be measured. In particular, in one embodiment for example, placement of a Hall Effect sensor with orthogonal measuring capability (e.g., Bₓ & B_{y} measuring) at the center of rotation of the shaft 10, permits capturing two quadrature signals corresponding to the sine and cosine of the shaft 10 rotation angle. Using conventional trigonometric techniques the rotation angle and speed of the rotating shaft 10 may be computed. In an embodiment the permanent magnet array 132 can be formed of permanent magnets 130a-n of square axial cross section. In another embodiment, the permanent magnet array 132 can be formed of permanent magnets 130a-n having rectangular axial cross section. In yet another embodiment the permanent magnet array 132 can be formed of permanent magnets 130a-n having a partial circumferential annular axial cross section.

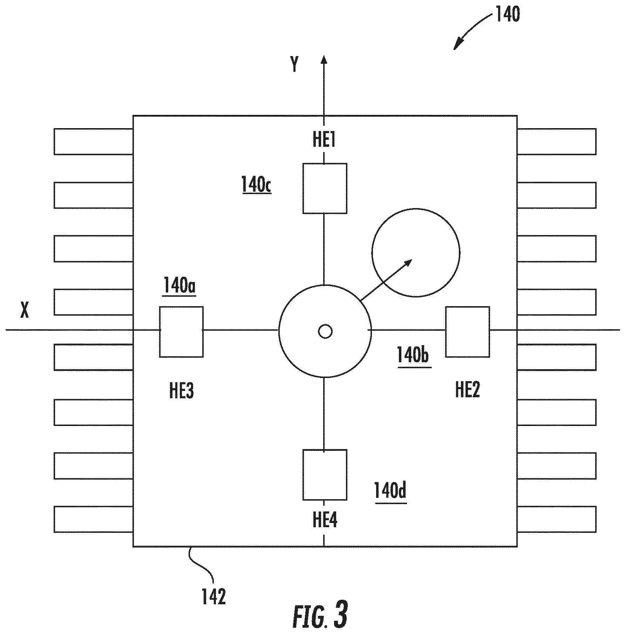

FIG. 3 depicts an example of a packaged Hall Effect sensor 140 as a packaged integrated circuit 142 as may be employed in an embodiment. As an example the package 142 includes four Hall Effect sensors 140a, 140b, 140c, and 140d arranged orthogonally, two in one axis denoted X and two sensors in the orthogonal axis denoted as Y. In an exemplary embodiment the packaged integrated circuit 142 of Hall Effect sensors 140 may be positioned at the center of rotation for the shaft 10 to measure the magnetic field produced by the Halbach array 132 of permanent magnets 130. As can be seen in FIG. 3 Hall Effect sensors 140a and 140b are configured to detect the magnetic field with respect to the X axis, while Hall Effect sensors 140c and 140d respectively are configured to detect the magnetic field relative to the Y axis. While the sensor package 142 depicted includes two sensors for both the X and Y directions, it should be understood and appreciated that only one sensor 40 in each axis in needed. Advantageously, the sensor package includes two sensors for each axis which facilitates additional signal processing for error detection and the like. In some cases, Hall Sensors measure induced voltage (which is again a function of flux linkage) and the magnitude of this voltage changes as the magnet rotates with rotor. This voltage signal can provide two pieces of information (a) magnitude (indicating the rotor position) and (b) frequency (indicating the rotor speed). Similar data can be extracted from Bₓ and B_{y} too. As angle provide the rotor position with respect to the Hall Sensor and frequency (requires at least one to two cycles to phase lock and decipher the frequency) can be translated into rotor speed using conventional techniques. Advantageously, the described embodiments employ the unique permanent magnet array 132 and orthogonal Hall Effect sensors 140 facilitates measuring and determining the rotor position at zero speed and/or very low speed The unique quadrature signals Bx and By are discernable and measurable at every rotor position regardless of speed once an initial calibration or characterization has been completed. This unique feature is very advantageous because many senor configurations do not provide sufficient information to determine position at zero speed or very low speed.

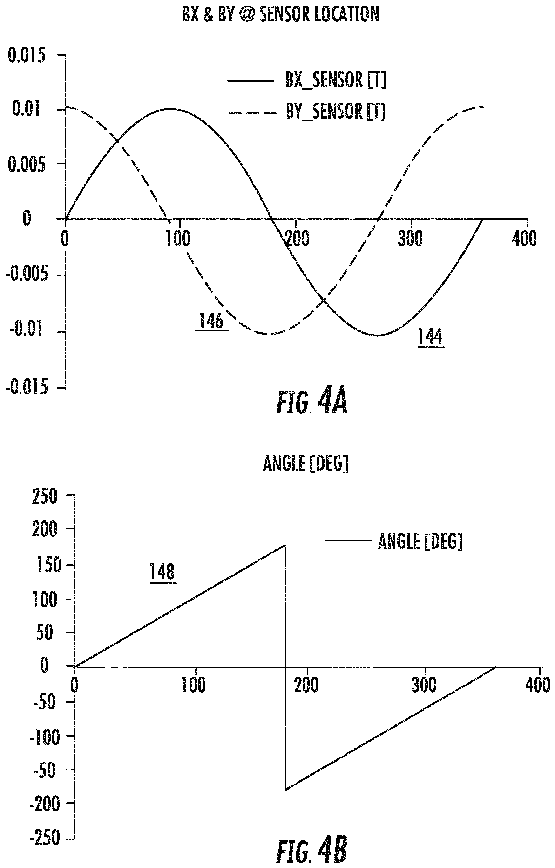

Turning now to FIGs 4A and 4B, which depict example wave forms from the Hall Effect sensors. FIG 4A depicts two sinusoids **Bₓ** depicted by reference numeral 144 and **B_{y}** depicted by reference numeral 146 corresponding to the measurements of the X and Y components of the magnetic field from the Halbach array 132 as detected by the Hall Effect sensors 140a, 140b and 140c, 140d respectively. FIG. 4B depicts the resolved angle 148 as derived from the sensor signals.

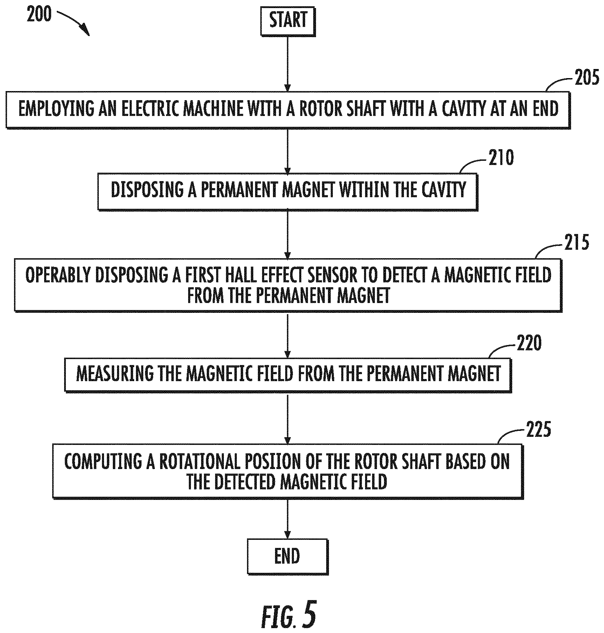

Turing now to FIG. 5, a flowchart of the method 200 of measuring the rotor shaft 10 position of an electric machine is depicted. The method can include a process step 205 of employing an electric machine with a rotor position sensing assembly 100 including a Halbach array 132 of permanent magnets 130 and a Hall Effect sensor assembly 142. The method 200 can also include process step 210 with forming a cylindrical cavity in an axial end of the rotor shaft 10 and positioning the Halbach array 132 in cavity formed in the rotor shaft in accordance with the embodiments described herein. At process step 215 at least two Hall Effect sensors arranged orthogonally in the same plane are disposed at approximately a center of rotation of the rotor shaft 10 in proximity to the Halbach array 132. As the shaft 10 is rotated, the Hall Effect sensor signals are measured and processed as depicted in process step 220. At process step 225 a composite angle is determined from the Hall Effect sensor signals employing conventional trigonometric techniques for processing quadrature signals.

Advantageously, the position sensing apparatus and methodology described herein provides for accurate prediction of position measurement of a rotary shaft. In particular, as may be employed for measuring the rotor position for and electric machine and motor drive control. The described embodiments may be modified for particular applications, size and speed of the rotating apparatus and machine. The advantages of employing the depth of the permanent magnet array 32 within the shaft to reduce axial load sensitivity and effectively eliminated radial load constraints typical of conventional Hall Effect sensing devices. Application of a permanent magnets arranged in a Halbach array to create uniform magnetic field improves detectability and sensitivity compared to conventions measurement schemes. The implementation of Hall Effect sensors positioned on stationary frame and arranged orthogonally to capture quadrature signals indicative of the position of the rotating shaft facilitates conventional signal processing of the data to determine the rotor position.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. A position sensor for measuring the rotation of a rotary shaft, the positon sensor comprising:
a rotary shaft having a cavity in an axial end thereof;
a permanent magnet array arranged as a Halbach array, the permanent magnet array disposed at a periphery of the cavity;
a first Hall Effect sensor configured to detect a magnetic field produced by the permanent magnet array in a first radial axis.

2. The position sensor of claim 1 further including a second Hall Effect sensor configured to detect a magnetic field and/or voltage produced by the permanent magnet array in a second radial axis.

3. The position sensor of claim 2 wherein the second radial axis is orthogonal to the first radial axis.

4. The position sensor of any preceding claim wherein the permanent magnet array is arranged as at least one of a Halbach cylinder and a polygon.

5. The position sensor of any preceding claim wherein a magnetic field produced by the permanent magnet array is substantially uniform in a center of the Halbach array.

6. The position sensor of any preceding claim wherein a magnetic field produced by the permanent magnet array radially outward of the Halbach array is substantially cancelled.

7. The position sensor of any preceding claim wherein the permanent magnet array comprises at least four permanent magnets.

8. The position sensor of any preceding claim wherein the permanent magnet array comprises permanent magnets of at least one of square axial cross section, rectangular axial cross section, and a partial circumferential annular axial cross section.

9. The position sensor of any preceding claim wherein the rotary shaft is a portion of an electric machine.

10. The position sensor of any preceding claim wherein the cavity is cylindrical, and the permanent magnet array is disposed at an outer circumference of the cavity.

11. The position sensor of any preceding claim further including:
a housing including a stator having a stator coil;
a rotor assembly disposed in the housing on the rotary shaft and operable to rotate within the housing, the rotor configured to operably couple magnetic with the stator, the rotary shaft having a cavity in an axial end thereof;
wherein the housing, stator coil, rotor assembly, permanent magnet array and first Hall effect sensor form an electric machine.

12. A method for measuring the rotation of a rotary shaft, the method comprising:
employing a rotary shaft having a cavity in an axial end thereof;
disposing a permanent magnet array arranged as a Halbach array at a periphery of the cavity;
operably disposing a first Hall Effect sensor configured to detect a magnetic field produced by the permanent magnet array in a first radial axis;
measuring the magnetic field from the permanent magnet array;
computing a rotational position of the rotary shaft based on the measurement.

13. The method of claim 12 further including operably disposing a second Hall Effect sensor configured to detect a magnetic field and/or voltage produced by the permanent magnet array in a second radial axis, wherein the second radial axis is orthogonal to the first radial axis and the computing is independent of at least one of a rotational position and rotational speed of the rotor shaft.

14. The method of claim 12 or 13 further including arranging the permanent magnet array as at least one of a Halbach cylinder and a polygon.

15. The method of claim 12, 13 or 14 wherein the cavity is cylindrical, and further including disposing the permanent magnet array at an outer circumference of the cavity.
